# EUROPEAN PATENT APPLICATION

(11) **EP 2 584 427 A2**
(43) Date of publication of application: **24.04.2013**
(21) Application number: 12189154.3
(22) Date of filing: 19.10.2012
(51) Int. Cl.: G06F 1/16

(54) **Portable electronic device**

(30) Priority: 21.10.2011 TW 100138400
(71) Applicant: eTurboTouch Technology Inc., JhongLi City 320 (TW)
(72) Inventor: Wang, Kuei-Ching, 325 Longtan Township (TW); Lin, Ta-Hu, 112 Taipei City (TW); Lin, Shou-Chieh, 330 Taoyuan City (TW)
(74) Representative: Meyer-Dulheuer, Karl-Hermann

(57) **Abstract**

A portable electronic device includes a casing, a display module and at least one touch input module. The display module is disposed on the casing and has a display surface. The touch input module is disposed on the casing and located below the display module with respect to the display surface.

## Description

### BACKGROUND OF THE INVENTION

### Field of Invention

The present invention relates to an electronic device and, in particular, to a portable electronic device.

### Related Art

Various kinds of touch input devices have been applied to electronic products in the recent years. For example, mobile phones and tablet computers are mostly configured with a touch screen as their input device. Regarding to a touch screen, the user can simply touch the screen directly to input instructions, control the cursor, or input words by writing. Besides, the touch screen can also show the virtual buttons, so that the user can click the virtual buttons to input the corresponding words.

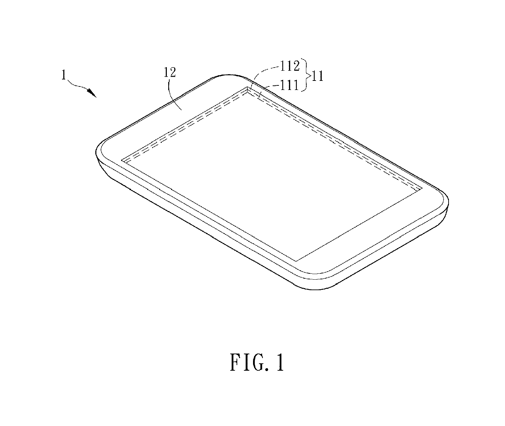

As shown in FIG. 1, a tablet computer 1 includes a touch screen 11 and a casing 12. The casing covers the touch screen 11, so that only a display surface of the touch screen 11 is exposed. In general, the touch screen 11 includes a display panel 111 and a touch input panel 112, which is disposed on the display surface of the display panel 111. The touch input panel 112 can be a resistive touch panel, a capacitive touch panel, a supersonic touch panel, or an IR touch panel, wherein the resistive touch input panel is most popular. The resistive touch input panel is mainly divided into 4-wire, 5-wire, 6-wire, and 8-wire types touch input panel. The 4-wire touch input panel has lower manufacturing cost and is fully developed, so that it has been widely applied to various products.

The conventional touch input panel 112 is usually cooperated with the display panel 111. For example, the display panel 111 can display an object, so that the user can aim at and click the corresponding area of the touch input panel 112. Otherwise, the display panel 111 may display the cursor, so that the user can control to move the cursor. If the touch screen 11 functions as a keyboard, it is necessary to show the entire or most keys on the display panel 111, so that the user can touch the specific area of the touch input panel 112 corresponding the shown key so as to key in the desired letter. This method is to show a virtual keyboard on the touch screen 11 instead of forming physical buttons on the touch input panel 112.

The conventional touch input panel 112 must cooperate with the display device 111 to provide the recognizable buttons for the user to clearly and correctly press the corresponding area(s), thereby generating the correct key signal. In other words, the conventional touch input panel 112 can not be used as a complete input device by itself.

In addition, the touch input panel 112 of the tablet computer 1 is disposed above the display surface of the display panel 111, so that the input area and the display area of the touch screen 11 are overlapped. Thus, the user may easily be interfered by the input area while viewing the display area.

Therefore, it is an important subject of the present invention to provide a touch input module independent from the display module, which can be integrated with a display device in an electronic apparatus.

### SUMMARY OF THE INVENTION

In view of the foregoing subject, an object of the present invention is to provide a portable electronic device that includes independent display module and touch input module.

To achieve the above object, the present invention discloses a portable electronic device including a casing, a display module and a touch input module. The display module is disposed on the casing and has a display surface. The touch input module is disposed on the casing and located below the display module with respect to the display surface.

In one embodiment, the touch input module is a touch input keyboard.

In one embodiment, the touch input module is slidingly disposed on the casing. For example, the casing has an accommodating recess, and the touch input module is slidingly disposed in the accommodating recess.

In one embodiment, the touch input module is pivotedly disposed on the casing. For example, the touch input module is accommodated at a back surface of the casing, and it can be pivoted from the back side to the front side of the casing.

In one embodiment, the touch input module is detachably disposed on the casing.

In one embodiment, the portable electronic device is a tablet computer or a smart phone.

In one embodiment, the portable electronic device includes a plurality of touch input modules, and at least two of the touch input modules are disposed on different sides of the casing.

In one embodiment, the touch input module includes a touch input panel, such as a resistive touch panel or a capacitive touch panel.

As mentioned above, the portable electronic device of the present invention includes a touch input module that is not disposed above the display surface of the display module but is located below the display surface. Therefore, the touch input module and the display module can operate independently, so that the touch input module can merely interfere the user while viewing the display module. In addition, the touch input module can function as a touch input keyboard, so that the user can operate it conveniently since the independent touch input keyboard can provide more buttons than the conventional virtual keyboard.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram of a conventional tablet computer; and

FIG. 2A to FIG. 5 are schematic diagrams of a portable electronic device according to a preferred embodiment of the present invention.

### DETAILED DESCRIPTION OF THE INVENTION

The present invention will be apparent from the following detailed description, which proceeds with reference to the accompanying drawings, wherein the same references relate to the same elements.

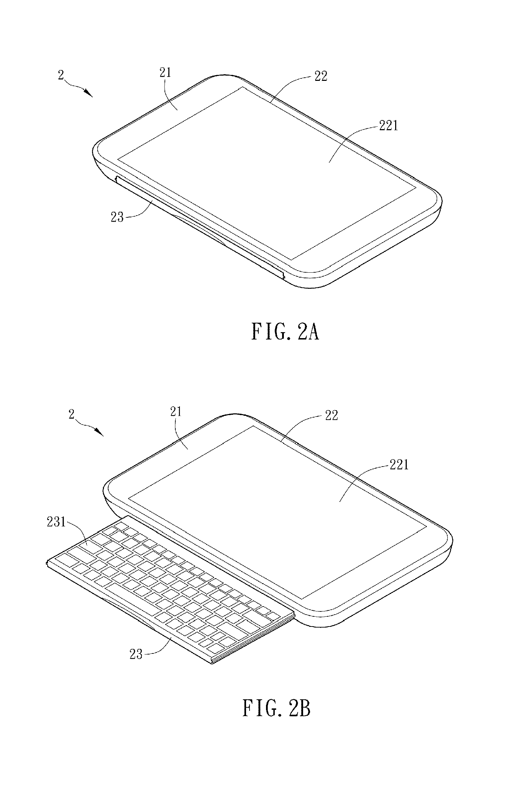

FIGS. 2A to 2C are schematic diagrams of a portable electronic device according to a preferred embodiment of the present invention. Referring to FIG. 2A, a portable electronic device 2 includes a casing 21, a display module 22 and a touch input module 23. The display module 22 is disposed on the casing 21 and has a display surface 221. The touch input module 23 is disposed on the casing 21 and located below the display module 22 with respect to the display surface 221.

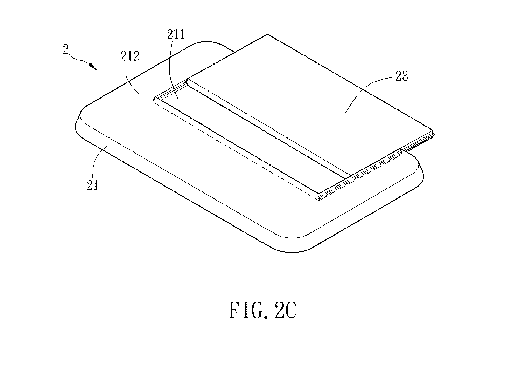

In this embodiment, as shown in FIGS. 2B and 2C, the touch input module 23 is slidingly disposed on the casing 21. For example, the casing 21 has an accommodating recess 211, and the touch input module 23 is slidingly disposed in the accommodating recess 211. The touch input module 23 is received within the accommodating recess 211 as it is not in use. Then, the user may pull the touch input module 23 out of the accommodating recess 211 and operate it. If it is not needed to operate the touch input module 23, the user may push the touch input module 23 into the accommodating recess 211. Besides, it is also possible the design a mechanism to directly eject the touch input module 23 out of the accommodating recess 211 after a triggering operation.

For example, the touch input module 23 can be a touch input keyboard, and it includes a plurality of input units 231. Every input unit 231 is defined by a button area, which represents at least one corresponding button. Each input unit 231 can generate an input signal based on a touch input action of the user. In other words, each input unit 231 of the touch input module 23 is functioned as an independent button, and each input unit 231 can generate the input signal corresponding to the button represented by each input unit 231.

The touch input module 23 includes a touch input panel such as a resistive touch panel or a capacitive touch panel. The touch input module 23 does not need a display device to show the button areas, but directly forms a plurality of input units 231 with individual input functions on the touch input panel. Each input unit 231 can present the corresponding button. For example, the outer surface or outer layer of the input units 231 can be configured with patterns (e.g. letters or symbols) corresponding to the buttons, so that the user can simply recognize them. Besides, the patterns can be configured by printing or laser ablation. Otherwise, it is also possible to provide a color fluorescent material or dye in the input units 231 to show the corresponding letters or symbols.

For example, the touch input module 23 may include buttons arranged as a standard keyboard. In more detailed, the plurality of input units 231 represent the buttons of a standard keyboard such as A-Z, F11 to F12, "All", "Ctrl", Space, Enter, Backspace, Home, End, Page Up, and Page Down. The input units 231 are configured on the touch input panel of the touch input module 23 at the positions corresponding to the buttons of a standard keyboard.

Furthermore, the touch input module 23 is configured as, for example but not limited to, a standard keyboard or a number keypad. Of course, the touch input module 23 can be configured as any suitable type (e.g. a number keypad) according to the application. Besides, the touch input panel of the touch input module 23 may be a flexible panel.

Otherwise, the touch input module 23 can be a touch pad, so that the user can move his-her finger or stylus on the touch input module 23 to generate a trace input.

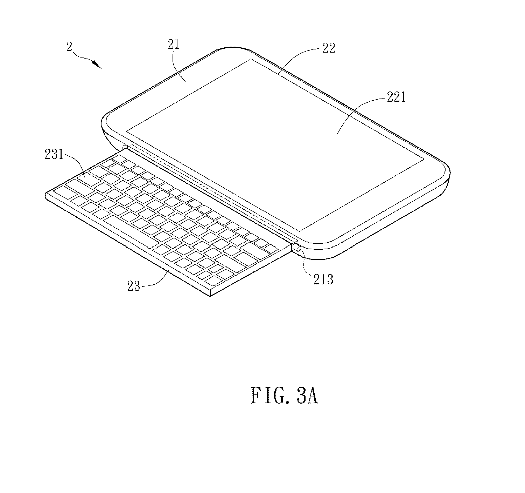

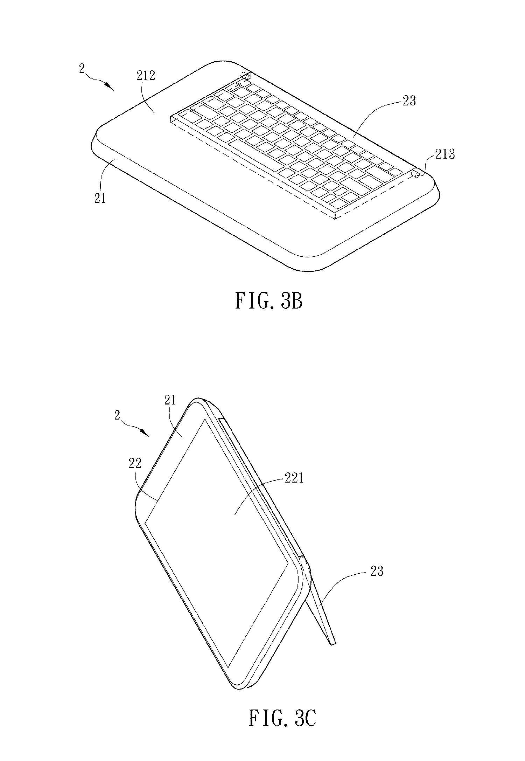

In addition, the touch input module 23 can be pivotedly disposed on the casing 21 as shown in FIGS. 3A and 3B. For example, the touch input module 23 is received in the back side 212 of the casing 21 and is pivotedly disposed on the casing 21 by a hinge 213. In more specific, when the touch input module 23 is received in the casing 21, the keyboard type is presented on the back side 212 of the casing 21 (see FIG. 3B), and the user can rotate the touch input module 23 from the back side 212 to the front side of the portable electronic device 2 for input operation (see FIG. 3A). In other embodiment, the touch input module 23 can be moved to the operation position by turning over. In this case, the touch input module 23 has a shaft connected to a rail, and it can be moved and turned over simultaneously to change its position from the back side to the front side.

In this embodiment, as shown in FIG. 3C, since the touch input module 23 is pivotedly disposed on the casing 21 and thus is rotatable, it can function as a stand of the portable electronic device 2. In practice, when the touch input module 23 is not completely rotated or turned over to the front side of the portable electronic device 2, an angle is formed between the touch input module 23 and the casing 21. Thus, the other sides of the touch input module 23 and the casing 21 opposite to their connecting portions can stand on a surface. In this case, the display module 22 may tilt to the surface, so that the user can easily watch the displayed content from the display surface 221. To be noted, the FIG. 3C does not show the keyboard type on the touch input module 23 to make the drawings simpler and clearer. Of course, except the above aspects of rotating and turning over, the touch input module 23 can be pulled, slide or ejected out from the accommodating recess to a specific position, and then connected to the shaft 213 of the casing 21. Accordingly, the touch input module 23 can be rotated or turned over from the back side 212 of the casing 21 so as to achieve the stand function for supporting the portable electronic device 2.

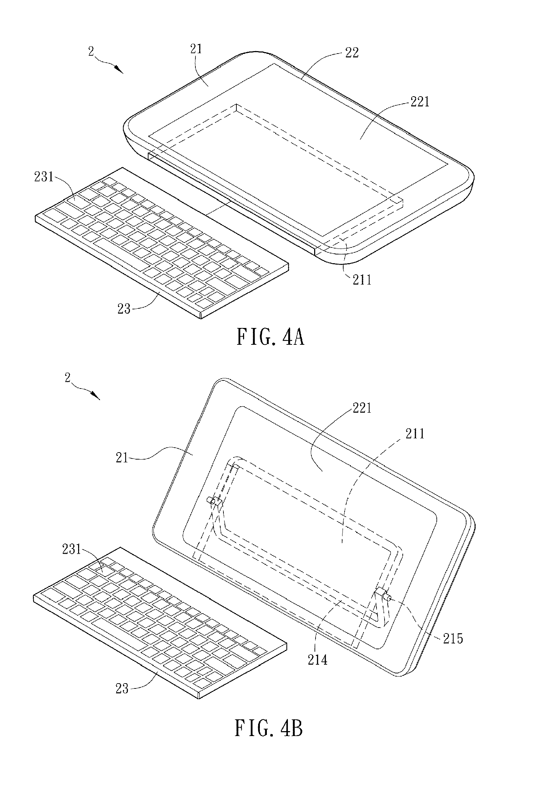

With reference to FIG. 4A, the touch input module 23 is detachably disposed on the casing 21. Thus, if the touch input module 23 is not in use, it can be received in the accommodating recess 211. Besides, the user can take the touch input module 23 out of the accommodating recess 211 completely for input operation. In this case, the touch input module 23 can be detached from the casing 21, and the touch input module 23 can communicate with the processing module of the portable electronic device 2 by wire or wireless transmission. The processing module is disposed in the casing 21 for processing the display content of the display module 22 and the input content of the touch input module 23. If the touch input module 23 is not in use, the user can put it back into the accommodating recess 211. To be noted, the touch input module 23 can be detachably disposed in the casing 21 by locking, attaching or magnetic connecting. In addition, the touch input module 23 can separate from the casing 21 by a spring.

With reference to FIG. 4B, the casing 21 of the portable electronic device 2 further includes a support member 214, which can be received within the accommodating recess 211 and located below the touch input module 23. Besides, the support member 214 is rotationally connected to the accommodating recess 211 through a shaft 215. Thus, after the touch input module 23 is pulled, ejected or separated from the accommodating recess 211, the support member 214 can be rotated or turned to the position as shown in FIG. 4B manually or automatically for supporting the portable electronic device 2 on a surface. Accordingly, the portable electronic device 2 can be operated at a preferred operation angle. Of course, the angle between the support member 214 and the casing 21 can be adjusted depending on the vision requirement. Besides, the touch input module may be rotated or turned out of the accommodating recess, and the support member is then rotated or turned out.

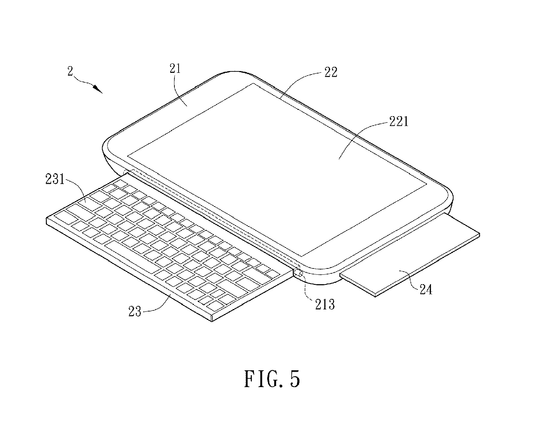

Moreover, the portable electronic device 2 may further include a plurality of touch input modules. For example, as shown in FIG. 5, the portable electronic device 2 includes two touch input modules 23 and 24, which are disposed at different sides of the casing 21. To be noted, the number of the touch input modules can be two or more. That is, the portable electronic device 2 may include a plurality of touch input modules, and at least two touch input modules 23 and 24 are disposed at different sides of the casing 21. In this case, the touch input modules 23 and 24 can be configured as any of above mentioned embodiments. For example, the touch input modules 23 and 24 can be received in the accommodating recess and can be pulled, ejected, rotated or turned over for the following operation.

In this embodiment, the touch input module 23 is a touch input keyboard, and the touch input module 24 is a touch pad. Alternatively, the touch input modules 23 and 24 can be both touch input keyboards or touch pads.

In the above embodiments, the portable electronic devices can be a tablet computer or a smart phone.

In summary, the portable electronic device of the present invention includes a touch input module that is not disposed above the display surface of the display module but is located below the display surface. Therefore, the touch input module and the display module can operate independently, so that the touch input module can merely interfere the user while viewing the display module. In addition, the touch input module can function as a touch input keyboard, so that the user can operate it conveniently since the independent touch input keyboard can provide more buttons than the conventional virtual keyboard.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A portable electronic device, comprising:
a casing;
a display module disposed on the casing and having a display surface; and
at least a touch input module disposed on the casing and located below the display module with respect to the display surface.

2. The portable electronic device of claim 1, wherein the touch input module is a touch input keyboard.

3. The portable electronic device of claim 1, wherein the touch input module is slidingly disposed on the casing.

4. The portable electronic device of claim 3, wherein the casing has an accommodating recess, and the touch input module is slidingly disposed in the accommodating recess.

5. The portable electronic device of claim 1, wherein the touch input module is pivotedly disposed on the casing.

6. The portable electronic device of claim 1, wherein the touch input module is accommodated at a back surface of the casing.

7. The portable electronic device of claim 1, wherein the touch input module is detachably disposed on the casing.

8. The portable electronic device of claim 1, wherein the portable electronic device is a tablet computer or a smart phone.

9. The portable electronic device of claim 1, wherein the portable electronic device comprises a plurality of touch input modules, and at least two of the touch input modules are disposed on different sides of the casing.

10. The portable electronic device of claim 1, wherein the touch input module comprises a touch input panel.

11. The portable electronic device of claim 10, wherein the touch input panel is a resistive touch panel or a capacitive touch panel.
